(19) Europäisches Patentamt
European Patent Office
Office européen des brevets

(11) **EP 2 888 334 B1**

## (12) EUROPEAN PATENT SPECIFICATION

(45) Date of publication and mention
of the grant of the patent:
**10.10.2018 Bulletin 2018/41**

(21) Application number: **13831214.5**

(22) Date of filing: **23.08.2013**

(51) Int Cl.:
*C09K 5/04* *(2006.01)*      *C09K 3/30* *(2006.01)*
*C07C 17/38* *(2006.01)*      *C07C 19/08* *(2006.01)*

(86) International application number:
**PCT/US2013/056396**

(87) International publication number:
**WO 2014/031962 (27.02.2014 Gazette 2014/09)**

(54) **REFRIGERANT MIXTURES COMPRISING TETRAFLUOROPROPENES AND DIFLUOROMETHANE AND USES THEREOF**

KÄLTEMITTELGEMISCHE MIT TETRAFLUORPROPENEN UND DIFLUORMETHAN SOWIE VERWENDUNGEN DAVON

MÉLANGES DE RÉFRIGÉRANTS COMPRENANT DES TÉTRAFLUOROPROPÈNES ET DU DIFLUOROMÉTHANE ET LEURS UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2012 US 201261692314 P**

(43) Date of publication of application:
**01.07.2015 Bulletin 2015/27**

(73) Proprietor: **The Chemours Company FC, LLC Wilmington DE 19801 (US)**

(72) Inventor: **MINOR, Barbara Haviland Elkton, Maryland 21921 (US)**

(74) Representative: **Dehns
St. Brides House
10 Salisbury Square
London EC4Y 8JD (GB)**

(56) References cited:
**WO-A1-2005/108523      WO-A1-2010/064005
WO-A2-2012/065026      WO-A2-2012/065026
WO-A2-2013/032908      CN-A- 102 516 945
US-A1- 2006 269 484      US-A1- 2007 007 488
US-A1- 2010 122 545**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**BACKGROUND**

1. Field of the Disclosure.

The present disclosure relates to compositions for use in refrigeration systems wherein the composition comprises tetrafluoropropenes and difluoromethane. The compositions of the present invention are useful in methods for producing cooling, methods for replacing refrigerants and refrigeration apparatus.

2. Description of Related Art.

The refrigeration industry has been working for the past few decades to find replacement refrigerants for the ozone-depleting chlorofluorocarbons (CFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, industry is facing regulations relating to global warming potential (GWP) for refrigerants used in mobile air-conditioning. Should the regulations be more broadly applied in the future, for instance for stationary air conditioning and refrigeration systems, an even greater need will be felt for refrigerants that can be used in all areas of the refrigeration and air-conditioning industry. Uncertainty as to the ultimate regulatory requirements relative to GWP, have forced the industry to consider multiple candidate compounds and mixtures.

Previously proposed replacement refrigerants for HFC refrigerants and refrigerant blends include HFC-152a, pure hydrocarbons, such as butane or propane, or "natural" refrigerants such as $CO_2$. Each of these suggested replacements has problems including toxicity, flammability, low energy efficiency, or requires major equipment design modifications. New replacements are also being proposed for HCFC-22, R-134a, R-404A, R-507A, R-407C and R-410A, among others. Uncertainty as to what regulatory requirements relative to GWP will ultimately be adopted have forced the industry to consider multiple candidate compounds and mixtures that balance the need for low GWP, OEL greater than 400 ppm, non-flammability, and existing system performance parameters.

CN 102 516 945 A and WO 2012/065026 A2 both disclose refrigerant compositions comprising HFO-1234yf, HFC-32, HFC-152a and trans-HFO-1234ze. Furthermore US 2007/007488 A1 discloses refrigerant compositions comprising HFO-1234yf, HFO-1234ze and one or more additional compounds including HFC-32. However, none of these documents discloses the compositions according to the present invention.

**BRIEF SUMMARY**

Certain compositions comprising tetrafluoropropenes and difluoromethane have been found to possess suitable properties to allow their use as replacements of higher GWP refrigerants currently in use, in particular R404A, R407A, R407F and R507A.

In accordance with the present invention compositions are disclosed consisting of: (A) a refrigerant component consisting essentially of from 4 to 16 weight percent of HFO-1234yf, from 34 to 38 weight percent of HFC-32, and from 48 to 60 weight percent of trans-HFO-1234ze; and optionally (B) a non-refrigerant component.

The refrigerant mixtures of the refrigerant component are useful as components in compositions also containing non-refrigerant components (e.g. lubricants), in processes to produce refrigeration, in methods for replacing refrigerant R404A, R407A, R407F or R-507A, and in refrigeration apparatus.

**BRIEF DESCRIPTION OF THE FIGURES**

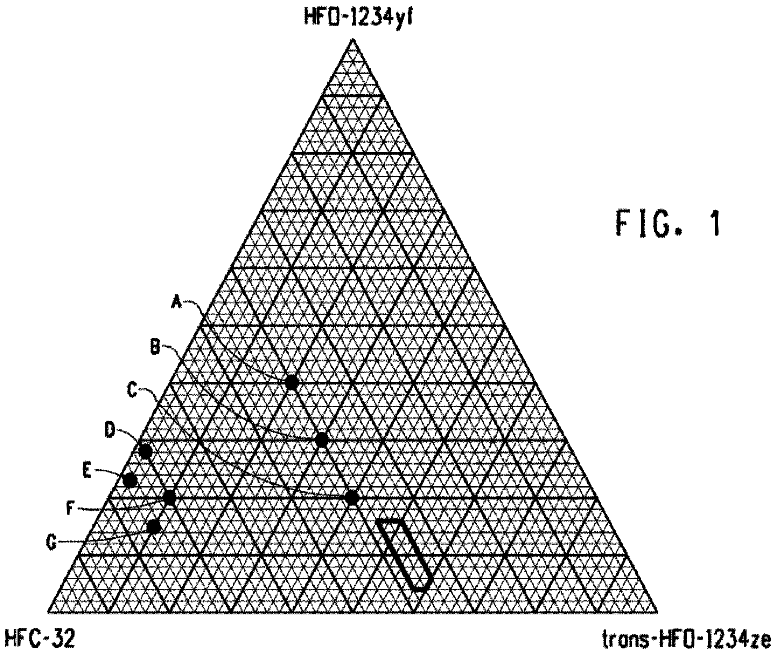

FIG.1 is a plot of one embodiment of the range of compositions as claimed and specific other known data points. Each apex of the triangle corresponds to 100% of the labeled components, HFO-1234yf, HFC-32 and trans-HFO-1234ze.

**DETAILED DESCRIPTION**

Before addressing details of embodiments described below, some terms are defined or clarified.

Definitions

As used herein, the term heat transfer fluid means a composition used to carry heat from a heat source to a heat sink.

A heat source is defined as any space, location, object or body from which it is desirable to add, transfer, move or remove heat. Examples of heat sources are spaces (open or enclosed) requiring refrigeration or cooling, such as refrigerator or freezer cases in a supermarket, building spaces requiring air conditioning, industrial water chillers or the passenger compartment of an automobile requiring air conditioning. In some embodiments, the heat transfer composition may remain in a constant state throughout the transfer process (i.e., not evaporate or condense). In other embodiments, evaporative cooling processes may utilize heat transfer compositions as well.

A heat sink is defined as any space, location, object or body capable of absorbing heat. A vapor compression refrigeration system is one example of such a heat sink.

A refrigerant is defined as a heat transfer fluid that undergoes a phase change from liquid to gas and back again during the cycle used to transfer of heat.

A heat transfer system is the system (or apparatus) used to produce a heating or cooling effect in a particular space. A heat transfer system may be a mobile system or a stationary system.

Examples of heat transfer systems are any type of refrigeration systems and air conditioning systems including, but are not limited to, air conditioners, freezers, refrigerators, heat pumps, water chillers, flooded evaporator chillers, direct expansion chillers, walk-in coolers, mobile refrigerators, mobile air conditioning units, dehumidifiers, and combinations thereof.

As used herein, mobile heat transfer system refers to any refrigeration, air conditioner or heating apparatus incorporated into a transportation unit for the road, rail, sea or air. In addition, mobile refrigeration or air conditioner units, include those apparatus that are independent of any moving carrier and are known as "intermodal" systems. Such intermodal systems include "container' (combined sea/land transport) as well as "swap bodies" (combined road/rail transport).

As used herein, stationary heat transfer systems are systems that are fixed in place during operation. A stationary heat transfer system may be associated within or attached to buildings of any variety or may be stand-alone devices located out of doors, such as a soft drink vending machine. These stationary applications may be stationary air conditioning and heat pumps, including but not limited to chillers, high temperature heat pumps, residential, commercial or industrial air conditioning systems (including residential heat pumps), and including window, ductless, ducted, packaged terminal, and those exterior but connected to the building such as rooftop systems. In stationary refrigeration applications, the disclosed compositions may be useful in equipment including commercial, industrial or residential refrigerators and freezers, ice machines, self-contained coolers and freezers, flooded evaporator chillers, direct expansion chillers, walk-in and reach-in coolers and freezers, and combination systems. In some embodiments, the disclosed compositions may be used in supermarket refrigeration systems. Additionally, stationary applications may utilize a secondary loop system that uses a primary refrigerant to produce cooling in one location that is transferred to a remote location via a secondary heat transfer fluid.

Refrigeration capacity (also referred to as cooling capacity) is a term which defines the change in enthalpy of a refrigerant in an evaporator per pound of refrigerant circulated, or the heat removed by the refrigerant in the evaporator per unit volume of refrigerant vapor exiting the evaporator (volumetric capacity). The refrigeration capacity is a measure of the ability of a refrigerant or heat transfer composition to produce cooling. Therefore, the higher the capacity, the greater the cooling that is produced. Cooling rate refers to the heat removed by the refrigerant in the evaporator per unit time.

Coefficient of performance (COP) is the amount of heat removed divided by the required energy input to operate the cycle. The higher the COP, the higher is the energy efficiency. COP is directly related to the energy efficiency ratio (EER) that is the efficiency rating for refrigeration or air conditioning equipment at a specific set of internal and external temperatures.

The term "subcooling" refers to the reduction of the temperature of a liquid below that liquid's saturation point for a given pressure. The saturation point is the temperature at which the vapor is completely condensed to a liquid, but subcooling continues to cool the liquid to a lower temperature liquid at the given pressure. By cooling a liquid below the saturation temperature (or bubble point temperature), the net refrigeration capacity can be increased. Subcooling thereby improves refrigeration capacity and energy efficiency of a system. Subcool amount is the amount of cooling below the saturation temperature (in degrees).

Superheat is a term that defines how far above its saturation vapor temperature (the temperature at which, if the composition is cooled, the first drop of liquid is formed, also referred to as the "dew point") a vapor composition is heated.

Temperature glide (sometimes referred to simply as "glide") is the absolute value of the difference between the starting and ending temperatures of a phase-change process by a refrigerant within a component of a refrigerant system, exclusive of any subcooling or superheating. This term may be used to describe condensation or evaporation of a near azeotrope or non-azeotropic composition. When referring to the temperature glide of a refrigeration, air conditioning or heat pump system, it is common to provide the average temperature glide being the average of the temperature glide in the evaporator and the temperature glide in the condenser.

By azeotropic composition is meant a constant-boiling mixture of two or more substances that behave as a single substance. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate within a refrigeration or air conditioning system during operation. Additionally, an azeotropic composition will not fractionate upon leakage from a refrigeration or air conditioning system.

An azeotrope-like composition (also commonly referred to as a "near-azeotropic composition") is a substantially constant boiling liquid admixture of two or more substances that behaves essentially as a single substance. One way to characterize an azeotrope-like composition is that the vapor produced by partial evaporation or distillation of the liquid has substantially the same composition as the liquid from which it was evaporated or distilled, that is, the admixture distills/refluxes without substantial composition change. Another way to characterize an azeotrope-like composition is that the bubble point vapor pressure and the dew point vapor pressure of the composition at a particular temperature are substantially the same. Herein, a composition is azeotrope-like if, after 50 weight percent of the composition is removed, such as by evaporation or boiling off, the difference in vapor pressure between the original composition and the composition remaining after 50 weight percent of the original composition has been removed is less than about 10 percent.

A non-azeotropic (also referred to as zeotropic) composition is a mixture of two or more substances that behaves as a simple mixture rather than a single substance. One way to characterize a non-azeotropic composition is that the vapor produced by partial evaporation or distillation of the liquid has a substantially different composition as the liquid from which it was evaporated or distilled, that is, the admixture distills/refluxes with substantial composition change. Another way to characterize a non-azeotropic composition is that the bubble point vapor pressure and the dew point vapor pressure of the composition at a particular temperature are substantially different. Herein, a composition is non-azeotropic if, after 50 weight percent of the composition is removed, such as by evaporation or boiling off, the difference in vapor pressure between the original composition and the composition remaining after 50 weight percent of the original composition has been removed is greater than about 10 percent.

As used herein, the term "lubricant" means any material added to a composition or a compressor (and in contact with any heat transfer composition in use within any heat transfer system) that provides lubrication to the compressor to aid in preventing parts from seizing.

As used herein, compatibilizers are compounds which improve solubility of the hydrofluorocarbon of the disclosed compositions in heat transfer system lubricants. In some embodiments, the compatibilizers improve oil return to the compressor. In some embodiments, the composition is used with a system lubricant to reduce oil-rich phase viscosity.

As used herein, oil-return refers to the ability of a heat transfer composition to carry lubricant through a heat transfer system and return it to the compressor. That is, in use, it is not uncommon for some portion of the compressor lubricant to be carried away by the heat transfer composition from the compressor into the other portions of the system. In such systems, if the lubricant is not efficiently returned to the compressor, the compressor will eventually fail due to lack of lubrication.

As used herein, "ultra-violet" dye is defined as a UV fluorescent or phosphorescent composition that absorbs light in the ultra-violet or "near" ultra-violet region of the electromagnetic spectrum. The fluorescence produced by the UV fluorescent dye under illumination by a UV light that emits at least some radiation with a wavelength in the range of from 10 nanometers to about 775 nanometers may be detected.

Flammability is a term used to mean the ability of a composition to ignite and/or propagate a flame. For refrigerants and other heat transfer compositions, the lower flammability limit ("LFL") is the minimum concentration of the heat transfer composition in air that is capable of propagating a flame through a homogeneous mixture of the composition and air under test conditions specified in ASTM (American Society of Testing and Materials) E681-04. The upper flammability limit ("UFL") is the maximum concentration of the heat transfer composition in air that is capable of propagating a flame through a homogeneous mixture of the composition and air under the same test conditions. In order to be classified by ASHRAE (American Society of Heating, Refrigerating and Air-Conditioning Engineers) as non-flammable, a refrigerant must be non-flammable under the conditions of ASTM E681-04 as formulated in the liquid and vapor phase as well as non-flammable in both the liquid and vapor phases that result during leakage scenarios.

ASHRAE also assigns a "lower flammable" rating, Class 2L flammability to compositions that have a burning velocity lower than 10 cm/sec. Burning velocity can be estimated by comparison to the known burning velocity of R-32.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100 year time horizon is commonly the value referenced. For mixtures, a weighted average can be calculated based on the individual GWPs for each component.

Ozone depletion potential (ODP) is a number that refers to the amount of ozone depletion caused by a substance. The ODP is the ratio of the impact on ozone of a chemical compared to the impact of a similar mass of CFC-11 (fluorotrichloromethane). Thus, the ODP of CFC-11 is defined to be 1.0. Other CFCs and HCFCs have ODPs that range from 0.01 to 1.0. HFCs have zero ODP because they do not contain chlorine.

Occupational exposure limit (OEL) is an upper limit on the acceptable concentration of a substance in workplace air for a particular material or class of materials. The OEL for a substance indicates the acceptable exposure over an 8 hour work day, 5 days a week for a working lifetime without adverse health effects. A refrigerant with an OEL of 400 ppm or greater is classified as a class A refrigerant by ASHRAE indicating a lower degree of toxicity. A refrigerant with an OEL of less than 400 ppm is classified as a class B refrigerant by ASHRAE indicating a higher degree of toxicity. Other industries use different terms including TLV-TWA (Threshold Limit Value - Time Weighted Average), WEEL (Workplace Environmental Exposure Limit) and PEL (Permissible Exposure Limit). The OEL of a mixture is the reciprocal addition of the mole fraction (mf) of each individual component divided by their respective OEL. The equation is:

$$1/(mf_1/OEL_1 + mf_2/OEL_2 + ... + mf_n/OEL_n)$$

where $mf_n$ is the mole fraction of component "n" and $OEL_n$ is the OEL of component "n".

In order to be classified by ASHRAE as Class A, lower toxicity rating a refrigerant formulation must have an OEL greater than 400 both as originally formulated and in the event of a leak. Per ASHRAE Standard 34-2010, nominal formulations are developed and then assigned manufacturing tolerances (as exact formulations are not made in commercial practice). The Worst Case Formulation (WCF) is selected to represent the formulation within these tolerances that could be most toxic based on the OELs of the individual components. The changes to the WCF are determined for a vapor leak at several conditions, an example of which is a cylinder 90% full by mass and leak at the bubble point temperature of the WCF + 10 degrees C or -40 degrees C, whichever is higher, per the standard. There are several other scenarios described and the scenario which gives the worst case WCFF is used in the analysis. Vapor leak conditions are continued until the formulation reaches atmospheric pressure, and the Worst Case Fractionated Formulation (WCFF) is determined indicating that residual liquid or vapor composition which is expected to have the lowest OEL. If the OEL is above 400 ppm for the as formulated and for the WCFF composition, then it is considered a Class A lower toxicity refrigerant composition. If the OEL is less than 400 ppm for either the as formulated or for the WCFF composition, then it is considered a Class B higher toxicity refrigerant composition.

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method or apparatus that includes materials, steps, features, components, or elements, in addition to those literally disclosed provided that these additional included materials, steps, features, components, or elements do materially affect the basic and novel characteristic(s) of the claimed invention. The term 'consisting essentially of occupies a middle ground between "comprising" and 'consisting of. Typically, components of the refrigerant mixtures and the refrigerant mixtures themselves can contain minor amounts (e.g., less than about 0.5 weight percent total) of impurities and/or byproducts (e.g., from the manufacture of the refrigerant components or reclamation of the refrigerant components from other systems) which do not materially affect the novel and basic characteristics of the refrigerant mixture. For example, HFC-134a may contain minor amounts of HFC-134 as a byproduct from the manufacture of HFC-134a. Of specific note in connection with this invention is trans-HFO-1234ze, which can be a byproduct of certain processes for producing HFO-1234yf (see e.g., US2009/0278075). However, it is noted that certain embodiments of the present invention by reciting trans-HFO-1234ze as a separate component include trans-HFO-1234ze whether or not its presence materially affects the novel and basic characteristics of the refrigerant mixture (alone or together with other impurities and/or byproducts which by themselves would not materially affect the novel and basic characteristics of the refrigerant mixture).

Where applicants have defined an invention or a portion thereof with an open-ended term such as "comprising," it should be readily understood that (unless otherwise stated) the description should be interpreted to also describe such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below. In case of conflict, the present specification, including definitions, will control. In addition, the materials, methods, and examples are illustrative only and not intended to be limiting.

2,3,3,3-tetrafluoropropene may also be referred to as HFO-1234yf, HFC-1234yf, or R1234yf. HFO-1234yf may be made by methods known in the art, such as by dehydrofluorination 1,1,1,2,3-pentafluoropropane (HFC-245eb) or 1,1,1,2,2-pentafluoropropane (HFC-245cb).

Difluoromethane (HFC-32 or R-32) is commercially available or may be made by methods known in the art, such as by dechlorofluorination of methylene chloride.

1,3,3,3-tetrafluoropropene (trans-HFO-1234ze) may be prepared by dehydrofluorination of a 1,1,1,2,3-pentafluoropropane (HFC-245eb, $CF_3CHFCH_2F$) or 1,1,1,3,3-pentafluoropropane (HFC-245fa, $CF_3CH_2CHF_2$). The dehydrofluorination reaction may take place in the vapor phase in the presence or absence of catalyst, and also in the liquid phase by reaction with caustic, such as NaOH or KOH. These reactions are described in more detail in U.S. Patent Publication No. 2006/0106263. HFO-1234ze may exist as one of two configurational isomers, cis- or trans- (also referred to as the E- and Z- isomers respectively). Trans-HFO-1234ze is available commercially from certain fluorocarbon manufacturers (e.g., Honeywell International Inc., Morristown, NJ).

Compositions

Disclosed are compositions consisting of: (A) a refrigerant component consisting essentially of from 4 to 16 weight percent of HFO-1234yf, from 34 to 38 weight percent of HFC-32, and from 48 to 60 weight percent of trans-HFO-1234ze; and optionally (B) a non-refrigerant component.

In one embodiment, the worst case fractionation formulation (WCFF) of the refrigerant component has an overall OEL of at least 400.

In another embodiment, the burning velocity of the overall refrigerant component of the composition is less than 10 cm/sec.

In one embodiment, the refrigerant component has a GWP of less than 600. In another embodiment, the refrigerant component has a GWP of less than 500. In another embodiment, the refrigerant component has a GWP of less than 300.

Also in another embodiment, the refrigerant component contains from 34 to 37 weight percent, from 34 to 36 weight percent, or from 34 to 35 weight percent of HFC-32.

In one embodiment, the refrigerant component of the composition consists essentially of from 4 to 8 weight percent of HFO-1234yf, from 34 to 38 weight percent of HFC-32, and from about 56 to about 60 weight percent of trans-HFO-1234ze.

FIG. 1 shows that the range of the claimed compositions, from 4 to 16 weight percent HFO-1234yf, from 34 to 38 weight percent HFC-32, and from 48 to 60 weight percent trans-HFO-1234ze does not incorporate compositions previously disclosed. The compositions shown by the points in FIG. 1 are:

A 40 wt% HFO1234yf, 40 wt% HFC-32, and 20 wt% trans-HFO-1234ze;

B 30 wt% HFO1234yf, 40 wt% HFC-32, and 30 wt% trans-HFO-1234ze;

C 20 wt% HFO1234yf, 40 wt% HFC-32, and 40 wt% trans-HFO-1234ze;

D 28 wt% HFO1234yf, 70 wt% HFC-32, and 2 wt% trans-HFO-1234ze;

E 23 wt% HFO1234yf, 75 wt% HFC-32, and 2 wt% trans-HFO-1234ze;

F 20 wt% HFO1234yf, 70 wt% HFC-32, and 10 wt% trans-HFO-1234ze; and

G 15 wt% HFO1234yf, 75 wt% HFC-32, and 10 wt% trans-HFO-1234ze.

All of compositions A through G fall outside of the ranges as claimed herein. Additionally, compositions A through G have been found to fractionate in such a manner as to produce compositions with OEL less than 400 (if the HFO-1234yf is set at 100 or lower). Thus, compositions A through G would be classified as Class B refrigerants (higher toxicity) by ASHRAE (per ASHRAE Standard 34), should the OEL for HFO-1234yf be set at 100 or lower.

Compositions of the present invention containing HFO-1234yf, HFC-32 and trans-HFO-1234ze provide nominal compositions, as well as WCFF compositions, with OEL which exceeds 400 ppm indicating Class A lower toxicity per ASHRAE Standard 34-2010. Additionally, these compositions have burning velocities less than 10 cm/sec establishing 2L lower flammability classification according to ASHRAE Standard 34-2010.

HFO-1234yf and mixtures containing HFO-1234yf are being considered as low GWP replacements for certain refrigerants and refrigerant mixtures that have relatively high GWP. In particular, R-404A (ASHRAE designation for a mixture containing 44 wt% HFC-125, 52 wt% HFC-143a (1,1,1-trifluoroethane), and 4 wt% HFC-134a) has a GWP of 3922 and will be in need of replacement. Further, R-507A (ASHRAE designation for a mixture containing 50 wt% HFC-125 and 50 wt% HFC-143a), which has virtually identical properties to R404A and can therefore be used in many R404A systems, has a GWP equal to 3985, and therefore does not provide a lower GWP replacement for R404A, but will be in need of replacement as well. R407A (ASHRAE designation for a blend of 20 weight percent R32, 40 weight percent R125 (pentafluoroethane), and 40 weight percent R134a) and R407F (ASHRAE designation for a blend of 30 weight percent R32, 30 weight percent R125 (pentafluoroethane), and 40 weight percent R134a) with GWPs of 2107 and 1825, respectively, may both need to replaced also. The compositions of the present invention provide low GWP replacements for all of these refrigerants currently in use.

In some embodiments, in addition to the tetrafluoropropenes and difluoromethane, the disclosed compositions may comprise optional non-refrigerant components.

In some embodiments, the optional non-refrigerant components (also referred to herein as additives) in the compositions disclosed herein may comprise one or more components selected from the group consisting of lubricants, dyes (including UV dyes), solubilizing agents, compatibilizers, stabilizers, tracers, perfluoropolyethers, anti-wear agents, extreme pressure agents, corrosion and oxidation inhibitors, metal surface energy reducers, metal surface deactivators, free radical scavengers, foam control agents, viscosity index improvers, pour point depressants, detergents, viscosity adjusters, and mixtures thereof. Indeed, many of these optional non-refrigerant components fit into one or more of these categories and may have qualities that lend themselves to achieve one or more performance characteristic.

In some embodiments, one or more non-refrigerant components are present in small amounts relative to the overall composition. In some embodiments, the amount of additive(s) concentration in the disclosed compositions is from less than about 0.1 weight percent to as much as about 5 weight percent of the total composition. In some embodiments of the present invention, the additives are present in the disclosed compositions in an amount between about 0.1 weight percent to about 5 weight percent of the total composition or in an amount between about 0.1 weight percent to about 3.5 weight percent. The additive component(s) selected for the disclosed composition is selected on the basis of the utility and/or individual equipment components or the system requirements.

In some embodiments, the lubricant is a mineral oil lubricant. In some embodiments, the mineral oil lubricant is selected from the group consisting of paraffins (including straight carbon chain saturated hydrocarbons, branched carbon chain saturated hydrocarbons, and mixtures thereof), naphthenes (including saturated cyclic and ring structures), aromatics (those with unsaturated hydrocarbons containing one or more ring, wherein one or more ring is characterized by alternating carbon-carbon double bonds) and non-hydrocarbons (those molecules containing atoms such as sulfur, nitrogen, oxygen and mixtures thereof), and mixtures and combinations of thereof.

Some embodiments may contain one or more synthetic lubricant. In some embodiments, the synthetic lubricant is selected from the group consisting of alkyl substituted aromatics (such as benzene or naphthalene substituted with linear, branched, or mixtures of linear and branched alkyl groups, often generically referred to as alkylbenzenes), synthetic paraffins and naphthenes, poly (alpha olefins), polyglycols (including polyalkylene glycols), dibasic acid esters, polyesters, polyol esters, neopentyl esters, polyvinyl ethers (PVEs), silicones, silicate esters, fluorinated compounds, phosphate esters, polycarbonates and mixtures thereof, meaning mixtures of the any of the lubricants disclosed in this paragraph.

The lubricants as disclosed herein may be commercially available lubricants. For instance, the lubricant may be paraffinic mineral oil, sold by BVA Oils as BVM 100 N, naphthenic mineral oils sold by Crompton Co. under the trademarks Suniso® 1GS, Suniso® 3GS and Suniso® 5GS, naphthenic mineral oil sold by Pennzoil under the trademark Sontex® 372LT, naphthenic mineral oil sold by Calumet Lubricants under the trademark Calumet® RO-30, linear alkylbenzenes sold by Shrieve Chemicals under the trademarks Zerol® 75, Zerol® 150 and Zerol® 500 and branched alkylbenzene sold by Nippon Oil as HAB 22, polyol esters (POEs) sold under the trademark Castrol® 100 by Castrol, United Kingdom, polyalkylene glycols (PAGs) such as RL-488A from Dow (Dow Chemical, Midland, Michigan), and mixtures thereof, meaning mixtures of any of the lubricants disclosed in this paragraph.

The lubricants used with the present invention may be designed for use with hydrofluorocarbon refrigerants and may be miscible with compositions as disclosed herein under compression refrigeration and air-conditioning apparatus' operating conditions. In some embodiments, the lubricants are selected by considering a given compressor's requirements and the environment to which the lubricant will be exposed.

In the compositions of the present invention including a lubricant, the lubricant is present in an amount of less than 5.0 weight percent to the total composition. In other embodiments, the amount of lubricant is between about 0.1 and 3.5 weight percent of the total composition.

Notwithstanding the above weight ratios for compositions disclosed herein, it is understood that in some heat transfer systems, while the composition is being used, it may acquire additional lubricant from one or more equipment components of such heat transfer system. For example, in some refrigeration, air conditioning and heat pump systems, lubricants may be charged in the compressor and/or the compressor lubricant sump. Such lubricant would be in addition to any lubricant additive present in the refrigerant in such a system. In use, the refrigerant composition when in the compressor may pick up an amount of the equipment lubricant to change the refrigerant-lubricant composition from the starting ratio.

In such heat transfer systems, even when the majority of the lubricant resides within the compressor portion of the system, the entire system may contain a total composition with as much as about 75 weight percent to as little as about 1.0 weight percent of the composition being lubricant. In some systems, for example supermarket refrigerated display cases, the system may contain about 3 weight percent lubricant (over and above any lubricant present in the refrigerant composition prior to charging the system) and 97 weight percent refrigerant.

The non-refrigerant component used with the compositions of the present invention may include at least one dye. The dye may be at least one ultra-violet (UV) dye. The UV dye may be a fluorescent dye. The fluorescent dye may be selected from the group consisting of naphthalimides, perylenes, coumarins, anthracenes, phenanthracenes, xanthenes, thioxanthenes, naphthoxanthenes, fluoresceins, and derivatives of said dye, and combinations thereof, meaning mixtures of any of the foregoing dyes or their derivatives disclosed in this paragraph.

In some embodiments, the disclosed compositions contain from about 0.001 weight percent to about 1.0 weight percent UV dye. In other embodiments, the UV dye is present in an amount of from about 0.005 weight percent to about 0.5 weight percent; and in other embodiments, the UV dye is present in an amount of from 0.01 weight percent to about 0.25 weight percent of the total composition.

UV dye is a useful component for detecting leaks of the composition by permitting one to observe the fluorescence of the dye at or in the vicinity of a leak point in an apparatus (e.g., refrigeration unit, air-conditioner or heat pump). The UV emission, e.g., fluorescence from the dye may be observed under an ultra-violet light. Therefore, if a composition containing such a UV dye is leaking from a given point in an apparatus, the fluorescence can be detected at the leak point, or in the vicinity of the leak point.

Another non-refrigerant component which may be used with the compositions of the present invention may include at least one solubilizing agent selected to improve the solubility of one or more dye in the disclosed compositions. In some embodiments, the weight ratio of dye to solubilizing agent ranges from about 99:1 to about 1:1. The solubilizing agents include at least one compound selected from the group consisting of hydrocarbons, hydrocarbon ethers, polyoxyalkylene glycol ethers (such as dipropylene glycol dimethyl ether), amides, nitriles, ketones, chlorocarbons (such as methylene chloride, trichloroethylene, chloroform, or mixtures thereof), esters, lactones, aromatic ethers, fluoroethers and 1,1,1-trifluoroalkanes and mixtures thereof, meaning mixtures of any of the solubilizing agents disclosed in this paragraph.

In some embodiments, the non-refrigerant component comprises at least one compatibilizer to improve the compatibility of one or more lubricants with the disclosed compositions. The compatibilizer may be selected from the group consisting of hydrocarbons, hydrocarbon ethers, polyoxyalkylene glycol ethers (such as dipropylene glycol dimethyl ether), amides, nitriles, ketones, chlorocarbons (such as methylene chloride, trichloroethylene, chloroform, or mixtures thereof), esters, lactones, aromatic ethers, fluoroethers, 1,1,1-trifluoroalkanes, and mixtures thereof, meaning mixtures of any of the compatibilizers disclosed in this paragraph.

The solubilizing agent and/or compatibilizer may be selected from the group consisting of hydrocarbon ethers consisting of the ethers containing only carbon, hydrogen and oxygen, such as dimethyl ether (DME) and mixtures thereof, meaning mixtures of any of the hydrocarbon ethers disclosed in this paragraph.

The compatibilizer may be linear or cyclic aliphatic or aromatic hydrocarbon compatibilizer containing from 6 to 15 carbon atoms. The compatibilizer may be at least one hydrocarbon, which may be selected from the group consisting of at least hexanes, octanes, nonane, and decanes, among others. Commercially available hydrocarbon compatibilizers include but are not limited to those from Exxon Chemical (USA) sold under the trademarks Isopar® H, a mixture of undecane ($C_{11}$) and dodecane ($C_{12}$) (a high purity $C_{11}$ to $C_{12}$ iso-paraffinic), Aromatic 150 (a Cg to $C_{11}$ aromatic) (, Aromatic 200 (a $C_9$ to $C_{15}$ aromatic) and Naptha 140 (a mixture of $C_5$ to $C_{11}$ paraffins, naphthenes and aromatic hydrocarbons) and mixtures thereof, meaning mixtures of any of the hydrocarbons disclosed in this paragraph.

The compatibilizer may alternatively be at least one polymeric compatibilizer. The polymeric compatibilizer may be a random copolymer of fluorinated and non-fluorinated acrylates, wherein the polymer comprises repeating units of at least one monomer represented by the formulae $CH_2=C(R^1)CO_2R^2$, $CH_2=C(R^3)C_6H_4R^4$, and $CH_2=C(R^5)C_6H_4XR^6$, wherein X is oxygen or sulfur; $R^1$, $R^3$, and $R^5$ are independently selected from the group consisting of H and $C_1$-$C_4$ alkyl radicals; and $R^2$, $R^4$, and $R^6$ are independently selected from the group consisting of carbon-chain-based radicals containing C, and F, and may further contain H, Cl, ether oxygen, or sulfur in the form of thioether, sulfoxide, or sulfone groups and mixtures thereof. Examples of such polymeric compatibilizers include those commercially available from E. I. du Pont de Nemours and Company, (Wilmington, DE, 19898, USA) under the trademark Zonyl® PHS. Zonyl® PHS is a random copolymer made by polymerizing 40 weight percent $CH_2=C(CH_3)CO_2CH_2CH_2(CF_2CF_2)_mF$ (also referred to as Zonyl® fluoromethacrylate or ZFM) wherein m is from 1 to 12, primarily 2 to 8, and 60 weight percent lauryl methacrylate ($CH_2=C(CH_3)CO_2(CH_2)_{11}CH_3$, also referred to as LMA).

In some embodiments, the compatibilizer component contains from about 0.01 to 30 weight percent (based on total amount of compatibilizer) of an additive which reduces the surface energy of metallic copper, aluminum, steel, or other metals and metal alloys thereof found in heat exchangers in a way that reduces the adhesion of lubricants to the metal. Examples of metal surface energy reducing additives include those commercially available from DuPont under the trademarks Zonyl® FSA, Zonyl® FSP, and Zonyl® FSJ.

Another non-refrigerant component which may be used with the compositions of the present invention may be a metal surface deactivator. The metal surface deactivator is selected from the group consisting of areoxalyl bis (benzylidene) hydrazide (CAS reg no. 6629-10-3), N,N'-bis(3,5-di-tert-butyl-4-hydroxyhydrocinnamoylhydrazine (CAS reg no. 32687-78-8), 2,2,'-oxamidobis-ethyl-(3,5-di-tert-butyl-4-hydroxyhydrocinnamate (CAS reg no. 70331-94-1), N,N'-(disalicyclidene)-1,2-diaminopropane (CAS reg no. 94-91-7) and ethylenediaminetetraacetic acid (CAS reg no. 60-00-4) and its salts, and mixtures thereof, meaning mixtures of any of the metal surface deactivators disclosed in this paragraph.

The non-refrigerant component used with the compositions of the present invention may alternatively be a stabilizer selected from the group consisting of hindered phenols, thiophosphates, butylated triphenylphosphorothionates, organo phosphates, or phosphites, aryl alkyl ethers, terpenes, terpenoids, epoxides, fluorinated epoxides, oxetanes, ascorbic acid, thiols, lactones, thioethers, amines, nitromethane, alkylsilanes, benzophenone derivatives, aryl sulfides, divinyl terephthalic acid, diphenyl terephthalic acid, ionic liquids, and mixtures thereof, meaning mixtures of any of the stabilizers disclosed in this paragraph.

The stabilizer may be selected from the group consisting of tocopherol; hydroquinone; t-butyl hydroquinone; monothiophosphates; and dithiophosphates, commercially available from Ciba Specialty Chemicals, Basel, Switzerland, hereinafter "Ciba", under the trademark Irgalube® 63; dialkylthiophosphate esters, commercially available from Ciba under the trademarks Irgalube® 353 and Irgalube® 350, respectively; butylated triphenylphosphorothionates, commercially available from Ciba under the trademark Irgalube® 232; amine phosphates, commercially available from Ciba under the trademark Irgalube® 349 (Ciba); hindered phosphites, commercially available from Ciba as Irgafos® 168 and Tris-(di-tert-butylphenyl)phosphite, commercially available from Ciba under the trademark Irgafos® OPH; (Di-n-octyl phosphite); and iso-decyl diphenyl phosphite, commercially available from Ciba under the trademark Irgafos® DDPP; trialkyl phosphates, such as trimethyl phosphate, triethylphosphate, tributyl phosphate, trioctyl phosphate, and tri(2-ethylhexyl)phosphate; triaryl phosphates including triphenyl phosphate, tricresyl phosphate, and trixylenyl phosphate; and mixed alkyl-aryl phosphates including isopropylphenyl phosphate (IPPP), and bis(t-butylphenyl)phenyl phosphate (TBPP); butylated triphenyl phosphates, such as those commercially available under the trademark Syn-O-Ad® including Syn-O-Ad® 8784; tert-butylated triphenyl phosphates such as those commercially available under the trademark Durad®620; isopropylated triphenyl phosphates such as those commercially available under the trademarks Durad® 220 and Durad®110; anisole; 1,4-dimethoxybenzene; 1,4-diethoxybenzene; 1,3,5-trimethoxybenzene; myrcene, alloocimene, limonene (in particular, d-limonene); retinal; pinene; menthol; geraniol; farnesol; phytol; Vitamin A; terpinene; delta-3-carene; terpinolene; phellandrene; fenchene; dipentene; caratenoids, such as lycopene, beta carotene, and xanthophylls, such as zeaxanthin; retinoids, such as hepaxanthin and isotretinoin; bornane; 1,2-propylene oxide; 1,2-butylene oxide; n-butyl glycidyl ether; trifluoromethyloxirane; 1,1-bis(trifluoromethyl)oxirane; 3-ethyl-3-hydroxymethyl-oxetane, such as OXT-101 (Toagosei Co., Ltd); 3-ethyl-3-((phenoxy)methyl)-oxetane, such as OXT-211 (Toagosei Co., Ltd); 3-ethyl-3-((2-ethyl-hexyloxy)methyl)-oxetane, such as OXT-212 (Toagosei Co., Ltd); ascorbic acid; methanethiol (methyl mercaptan); ethanethiol (ethyl mercaptan); Coenzyme A; dimercaptosuccinic acid (DMSA); grapefruit mercaptan ((R)-2-(4-methylcyclohex-3-enyl)propane-2-thiol)); cysteine ((R)-2-amino-3-sulfanyl-propanoic acid); lipoamide (1,2-dithiolane-3-pentanamide); 5,7-bis(1,1-dimethylethyl)-3-[2,3(or 3,4)-dimethylphenyl]-2(3H)-benzofuranone, commercially available from Ciba under the trademark Irganox® HP-136; benzyl phenyl sulfide; diphenyl sulfide; diisopropylamine; dioctadecyl 3,3'-thiodipropionate, commercially available from Ciba under the trademark Irganox® PS 802 (Ciba); didodecyl 3,3'-thiopropionate, commercially available from Ciba under the trademark Irganox® PS 800; di-(2,2,6,6-tetramethyl-4-piperidyl)sebacate, commercially available from Ciba under the trademark Tinuvin® 770; poly-(N-hydroxyethyl-2,2,6,6-tetramethyl-4-hydroxy-piperidyl succinate, commercially available from Ciba under the trademark Tinuvin® 622LD (Ciba); methyl bis tallow amine; bis tallow amine; phenol-alpha-naphthylamine; bis(dimethylamino)methylsilane (DMAMS); tris(trimethylsilyl)silane (TTMSS); vinyltriethoxysilane; vinyltrimethoxysilane; 2,5-difluorobenzophenone;

2',5'-dihydroxyacetophenone; 2-aminobenzophenone; 2-chlorobenzophenone; benzyl phenyl sulfide; diphenyl sulfide; dibenzyl sulfide; ionic liquids; and mixtures and combinations thereof.

The additive used with the compositions of the present invention may alternatively be an ionic liquid stabilizer. The ionic liquid stabilizer may be selected from the group consisting of organic salts that are liquid at room temperature (approximately 25 °C), those salts containing cations selected from the group consisting of pyridinium, pyridazinium, pyrimidinium, pyrazinium, imidazolium, pyrazolium, thiazolium, oxazolium and triazolium and mixtures thereof; and anions selected from the group consisting of $[BF_4]^-$, $[PF_e]^-$, $[SbF_6]^-$, $[CF_3SO_3]^-$, $[HCF_2CF_2SO_3]^-$, $[CF_3HFCCF_2SO_3]^-$, $[HCClFCF_2SO_3]^-$, $[(CF_3SO_2)_2N]^-$, $[(CF_3CF_2SO_2)_2N]^-$, $[(CF_3SO_2)_3C]^-$, $[CF_3CO_2]^-$, and F- and mixtures thereof. In some embodiments, ionic liquid stabilizers are selected from the group consisting of emim $BF_4$ (1-ethyl-3-methylimidazolium tetrafluoroborate); bmim $BF_4$ (1-butyl-3-methylimidazolium tetraborate); emim $PF_6$ (1-ethyl-3-methylimidazolium hexafluorophosphate); and bmim $PF_6$ (1-butyl-3-methylimidazolium hexafluorophosphate), all of which are available from Fluka (Sigma-Aldrich).

In some embodiments, the stabilizer may be a hindered phenol, which is any substituted phenol compound, including phenols comprising one or more substituted or cyclic, straight chain, or branched aliphatic substituent group, such as, alkylated monophenols including 2,6-di-tert-butyl-4-methylphenol; 2,6-di-tert-butyl-4-ethylphenol; 2,4-dimethyl-6-tertbutylphenol; tocopherol; and the like, hydroquinone and alkylated hydroquinones including t-butyl hydroquinone, other derivatives of hydroquinone; and the like, hydroxylated thiodiphenyl ethers, including 4,4'-thio-bis(2-methyl-6-tert-butylphenol); 4,4'-thiobis(3-methyl-6-tertbutylphenol); 2,2'-thiobis(4methyl-6-tert-butylphenol); and the like, alkylidene-bisphenols including,: 4,4'-methylenebis(2,6-di-tertbutylphenol); 4,4'-bis(2,6-di-tert-butylphenol); derivatives of 2,2'- or 4,4-biphenoldiols; 2,2'-methylenebis(4-ethyl-6-tertbutylphenol); 2,2'-methylenebis(4-methyl-6-tertbutylphenol); 4,4-butylidenebis(3-methyl-6-tert-butylphenol); 4,4-isopropylidenebis(2,6-di-tert-butylphenol); 2,2'-methylenebis(4-methyl-6-nonylphenol); 2,2'-isobutylidenebis(4,6-dimethylphenol; 2,2'-methylenebis(4-methyl-6-cyclohexylphenol, 2,2- or 4,4-biphenyldiols including 2,2'-methylenebis(4-ethyl-6-tert-butylphenol); butylated hydroxytoluene (BHT, or 2,6-di-tert-butyl-4-methylphenol), bisphenols comprising heteroatoms including 2,6-di-tert-alpha-dimethylamino-p-cresol, 4,4-thiobis(6-tert-butyl-m-cresol); and the like; acylaminophenols; 2,6-di-tert-butyl-4(N,N'-dimethylaminomethylphenol); sulfides including; bis(3-methyl-4-hydroxy-5-tert-butylbenzyl)sulfide; bis(3,5-di-tert-butyl-4-hydroxybenzyl)sulfide and mixtures thereof, meaning mixtures of any of the phenols disclosed in this paragraph.

The non-refrigerant component which is used with compositions of the present invention may alternatively be a tracer. The tracer may be two or more tracer compounds from the same class of compounds or from different classes of compounds. In some embodiments, the tracer is present in the compositions at a total concentration of about 50 parts per million by weight (ppm) to about 1000 ppm, based on the weight of the total composition. In other embodiments, the tracer is present at a total concentration of about 50 ppm to about 500 ppm. Alternatively, the tracer is present at a total concentration of about 100 ppm to about 300 ppm.

The tracer may be selected from the group consisting of hydrofluorocarbons (HFCs), deuterated hydrofluorocarbons, perfluorocarbons, fluoroethers, brominated compounds, iodated compounds, alcohols, aldehydes and ketones, nitrous oxide and combinations thereof. Alternatively, the tracer may be selected from the group consisting of fluoroethane, 1,1,-difluoroethane, 1,1,1-trifluoroethane, 1,1,1,3,3,3-hexafluoropropane, 1,1,1,2,3,3,3-heptafluoropropane, 1,1,1,3,3-pentafluoropropane, 1,1,1,3,3-pentafluorobutane, 1,1,1,2,3,4,4,5,5,5-decafluoropentane, 1,1,1,2,2,3,4,5,5,6,6,7,7,7-tridecafluoroheptane, iodotrifluoromethane, deuterated hydrocarbons, deuterated hydrofluorocarbons, perfluorocarbons, fluoroethers, brominated compounds, iodated compounds, alcohols, aldehydes, ketones, nitrous oxide ($N_2O$) and mixtures thereof. In some embodiments, the tracer is a blend containing two or more hydrofluorocarbons, or one hydrofluorocarbon in combination with one or more perfluorocarbons.

The tracer may be added to the compositions of the present invention in predetermined quantities to allow detection of any dilution, contamination or other alteration of the composition.

The additive which may be used with the compositions of the present invention may alternatively be a perfluoropolyether as described in detail in US2007-0284555.

It will be recognized that certain of the additives referenced above as suitable for the non-refrigerant component have been identified as potential refrigerants. However in accordance with this invention, when these additives are used, they are not present at an amount that would affect the novel and basic characteristics of the refrigerant mixtures of this invention. Preferably, the refrigerant mixtures and the compositions of this invention containing them, contain no more than about 0.5 weight percent of the refrigerants other than HFO-1234yf, HFC-32 and trans-HFO-1234ze.

In one embodiment, the compositions disclosed herein may be prepared by any convenient method to combine the desired amounts of the individual components. A preferred method is to weigh the desired component amounts and thereafter combine the components in an appropriate vessel. Agitation may be used, if desired.

Compositions of the present invention have zero ozone depletion potential and low global warming potential (GWP). Additionally, the compositions of the present invention will have global warming potentials that are less than many hydrofluorocarbon refrigerants currently in use. One aspect of the present invention is to provide a refrigerant with a global warming potential of less than 1000, less than 600, less than 500, less than 400, less than 300, less than 150, less than 100, or less than 50.

Apparatus, Methods and Processes of Use

The compositions disclosed herein are useful as heat transfer compositions or refrigerants. In particular, the compositions comprising HFO-1234yf, HFC-32 and HFO-1234ze are useful as refrigerants. Also, the compositions comprising HFO-1234yf, HFC-32 and HFO-1234ze are useful as replacements for R404A, R407A, R407F or R507A in refrigeration systems.

Vapor-compression refrigeration systems include an evaporator, a compressor, a condenser, and an expansion device. A refrigeration cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator, by withdrawing heat from the environment, at a low temperature to form a gas and produce cooling. Often air or a heat transfer fluid flows over or around the evaporator to transfer the cooling effect caused by the evaporation of the refrigerant in the evaporator to a body to be cooled. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

A method is provided for replacing R404A, R407A, R407F or R507A in refrigeration equipment including an evaporator designed for a refrigerant evaporation temperature between about -40°C and about 0°C. The method comprises replacing said R404A, R407A, R407F or R507A with a refrigerant of the present invention consisting of HFO-1234yf, HFC-32 and trans-HFO-1234ze.

In one embodiment, a method for producing refrigeration in refrigeration equipment suitable for using R404A, R407A, R407F or R507A as a refrigerant is provided. The method comprises producing refrigeration in said equipment using a refrigerant of the present invention consisting of HFO-1234yf, HFC-32 and trans-HFO-1234ze.

In one embodiment, a refrigeration apparatus containing a refrigerant composition and suitable for using a refrigerant composition wherein R404A, R407A, R407F or R507A is the refrigerant component of said refrigerant composition is provided. The apparatus is characterized by: containing the refrigerant composition of the present invention consisting of HFO-1234yf, HFC-32 and trans-HFO-1234ze.

In another embodiment, a refrigerant apparatus containing a refrigerant composition and including an evaporator designed for a refrigerant evaporation temperature between about -40°C and about 0°C is provided. The apparatus is characterized by: containing the refrigerant composition of the present invention consisting of HFO-1234yf, HFC-32, and trans-HFO-1234ze.

In one embodiment, disclosed herein is a process for producing cooling comprising condensing a refrigerant mixture as disclosed herein and thereafter evaporating said composition in the vicinity of a body to be cooled.

A body to be cooled may be defined as any space, location, object or body for which it is desirable to provide cooling. Examples include spaces (open or enclosed) requiring refrigeration or cooling, such as refrigerator or freezer cases in a supermarket.

By vicinity is meant that the evaporator of the system containing the refrigerant mixture is located either within or adjacent to the body to be cooled, such that air moving over the evaporator would move into or around the body to be cooled.

In some embodiments, the refrigerant mixtures as disclosed herein may be useful in particular in refrigeration applications including medium or low temperature refrigeration. Medium temperature refrigeration systems includes supermarket and convenience store refrigerated cases for beverages, dairy, fresh food transport and other items requiring refrigeration. Low temperature refrigeration systems include supermarket and convenience store freezer cabinets and displays, ice machines and frozen food transport. Other specific uses may be in commercial, industrial or residential refrigerators and freezers, ice machines, self-contained coolers and freezers, supermarket rack and distributed systems, walk-in and reach-in coolers and freezers, and combination systems. Of particular note are low temperature refrigeration systems containing the compositions of the present invention.

Additionally, in some embodiments, the disclosed compositions may function as primary refrigerants in secondary loop systems that provide cooling to remote locations by use of a secondary heat transfer fluid, which may comprise water, a glycol, carbon dioxide, or a fluorinated hydrocarbon fluid. In this case the secondary heat transfer fluid is the body to be cooled as it is adjacent to the evaporator and is cooled before moving to a remote body to be cooled.

The compositions disclosed herein may be useful as low GWP (global warming potential) replacements for currently used refrigerants, including R404A (ASHRAE designation for a blend of 44 weight percent R125, 52 weight percent R143a (1,1,1-trifluoroethane), and 4.0 weight percent R134a); R407A (ASHRAE designation for a blend of 20 weight percent R32, 40 weight percent R125 (pentafluoroethane), and 40 weight percent R134a); R407F (ASHRAE designation for a blend of 30 weight percent R32, 30 weight percent R125 (pentafluoroethane), and 40 weight percent R134a) and R-507A (ASHRAE designation for a blend of 50 weight percent R125 and 50 weight percent R143a).

Often replacement refrigerants are most useful if capable of being used in the original refrigeration equipment designed for a different refrigerant. Additionally, the compositions as disclosed herein may be useful as replacements for R404A, R407A, R407F or R507A in equipment designed for R404A, R407A, R407F or R507A with some system modifications. Further, the compositions as disclosed herein comprising HFO-1234yf, HFC-32, and trans-HFO-1234ze, may be useful for replacing R404A, R407A, R407F or R507A in equipment specifically modified for or produced entirely for these new compositions comprising HFO-1234yf, HFC-32, and trans-HFO-1234ze.

In many applications, some embodiments of the disclosed compositions are useful as refrigerants and provide at least comparable cooling performance (meaning cooling capacity and energy efficiency) as the refrigerant for which a replacement is being sought.

In another embodiment is provided a method for replacing a refrigerant selected from the group consisting of R404A, R407A, R407F and R507A. The method comprises charging a refrigeration apparatus with a refrigerant mixture comprising HFO-1234yf, HFC-32, and trans-HFO-1234ze, as described herein. In one embodiment the refrigeration apparatus is suitable for use with in of R404A, R407A, R407F or R507A. In another embodiment the refrigeration apparatus includes systems with evaporating temperatures in the range of from about -40°C to about 0°C. Of note are embodiments wherein the refrigeration apparatus includes systems with evaporating temperatures in the range of from about -40°C to about -20°C. Also of note are embodiments wherein the refrigeration apparatus includes systems with evaporating temperatures in the range of from about -20°C to about 0°C

In another embodiment is provided a method for recharging a heat transfer system that contains a refrigerant to be replaced and a lubricant, said method comprising removing the refrigerant to be replaced from the heat transfer system while retaining a substantial portion of the lubricant in said system and introducing one of the compositions herein disclosed to the heat transfer system.

In another embodiment, a heat exchange system comprising a composition disclosed herein is provided, wherein said system is selected from the group consisting of freezers, refrigerators, walk-in coolers, super market refrigeration or freezer systems, mobile refrigerators, and systems having combinations thereof.

In one embodiment, there is provided a heat transfer system containing a composition as disclosed herein. In another embodiment is disclosed a refrigeration apparatus containing a composition as disclosed herein. In another embodiment, is disclosed a stationary refrigeration apparatus containing a composition as disclosed herein. In a particular embodiment, is disclosed a medium temperature refrigeration apparatus containing the composition of the present invention. In another particular embodiment, is disclosed a low temperature refrigeration apparatus containing the composition of the present invention. The apparatus typically includes an evaporator, a compressor, a condenser, and an expansion device.

In yet another embodiment is disclosed a mobile refrigeration apparatus containing a composition as disclosed herein.

### EXAMPLES

The concepts disclosed herein will be further described in the following examples, which do not limit the scope of the invention described in the claims.

### EXAMPLE 1

Vapor Leakage of HFC-32/HFO-1234yf/trans-HFO-1234ze compositions

Compositions of the present invention and comparative compositions are evaluated under vapor leak conditions as described under ASHRAE Standard 34 "Designation and Safety Classification of Refrigerants" to evaluate scenarios whereby requirements could be met for an Occupational Exposure Limit (OEL) of at least 400 ppm. This would allow an ASHRAE Class A lower toxicity rating which is preferred by the HVAC&R industry. Per the standard, nominal formulations are developed and then assigned manufacturing tolerances (as exact formulations are not made in commercial practice). The Worst Case Formulation (WCF) is selected to represent the formulation that could be most toxic based on the OELs of the individual components. The change to the WCF is determined for vapor leak at worst case conditions, which in the case of the compositions of the present invention is the bubble point of the WCF + 10 degrees C per the standard or -40 degrees C whichever is higher. Vapor leak conditions are continued until the formulation reaches atmospheric pressure (for this example after about 53-63% leakage), and the Worst Case Fractionated Formulation (WCFF) is determined indicating the residual liquid or vapor composition which is expected to be the most flammable or most toxic. If the OEL is above 400 ppm and the WCFF is expected to be non-flammable, it is considered a preferred mixture. Results are shown in Table 1 below for a range of potential OELs for HFO-1234yf at 50 ppm, 100 ppm, 150 ppm and 200 ppm and compositions are adjusted accordingly to meet Class A requirements. GWP has also been calculated based on IPCC AR4 values where available.

**TABLE 1**

| | wt% | | | | |
|---|---|---|---|---|---|
| | **HFC-32** | **HFO-1234yf** | **trans-HFO-1234ze** | **OEL (ppm)** | **GWP** |
| R404A | | | | 1000 | 3922 |
| R-407F | | | | 1000 | 1825 |
| R-507A | | | | 1000 | 3985 |
| R-407A | | | | 1000 | 2107 |
| If HFO-1234yf OEL = 50 | | | | | |
| Nominal | 36 | 6 | 58 | 527 | 247 |
| MFR Tolerance | 34-38 | 4-8 | 56-60 | | |
| WCF | 34 | 8 | 58 | 458 | |
| WCFF (Bub Pt +10C = - 36C, liq comp after 53% leak), 90% Full | 9.6 | 7.2 | 83.2 | 414 | |
| | wt% | | | | |
| | **HFC-32** | **HFO-1234yf** | **trans-HFO-1234ze** | **OEL (ppm)** | **GWP** |
| If HFO-1234yf OEL = 100 | | | | | |
| Nominal | 36 | 14 | 50 | 508 | 247 |
| MFR Tolerance | 34-38 | 12-16 | 48-52 | | |
| WCF | 34 | 16 | 50 | 473 | |
| WCFF (Bub Pt +10C = - 37C, liq comp after 57% leak) 90% Full | 9.1 | 15.6 | 75.3 | 410 | |
| If HFO-1234yf OEL = 150 | | | | | |
| Nominal | 36 | 22 | 42 | 514 | 246 |
| MFR Tolerance | 34-38 | 20-24 | 40-44 | | |
| WCF | 34 | 24 | 42 | 490 | |
| WCFF (Bub Pt +10C = - 37C, liq comp after 60% leak), 90% Full | 8.7 | 25.3 | 66.0 | 408 | |
| HFO-1234yf OEL = 200 | | | | | |
| Nominal | 36.0 | 30 | 34 | 527 | 246 |
| MFR Tolerance | 34-38 | 28-32 | 32-36 | | |
| WCF | 34 | 32 | 34 | 507 | |
| WCFF (Bub Pt +10C = - 38C, liq comp after 63% leak), 90% Full | 8.4 | 36.4 | 55.2 | 408 | |

The data shows that compositions of the present invention containing 4 to 16 weight percent HFO-1234yf, 34 to 38 weight percent HFC-32 and 48 to 60 weight percent trans-HFO-1234ze provide nominal compositions, as well as WCFF compositions, with OEL which exceed 400 ppm indicating Class A lower toxicity per ASHRAE Standard 34 even when the OEL of HFO-1234yf is set at 50 or 100ppm. Additionally, these compositions have burning velocities less than 10 cm/sec establishing 2L lower flammability classification according to ASHRAE Standard 34, because the burning velocity of all components is less than 10 cm/sec

## EXAMPLE 2

Cooling performance for HFC-32/HFO-1234yf/trans-HFO-1234ze compositions

Cooling performance for compositions of the present invention is determined and displayed in Table 2 as compared to R-404A; R-507A; R-407F; and R-407A. Compressor discharge temperatures, COP (energy efficiency) and cooling capacity (cap) are calculated from physical property measurements for the following specific conditions:

| | |
|---|---|
| Evaporator temperature | -30°C |
| Condenser temperature | 40°C |
| Subcool amount | 4°K |
| Return gas temperature | -5°C |
| Compressor efficiency | 70% |

Note that the superheat is included in cooling capacity. GWP has also been calculated based on IPCC AR4 values where available.

**TABLE 2**

| | wt% | | | OEL (ppm) | GWP | Disch T (C) | Cap (kJ/m³) | Rel Cap to 404A | COP | COP Rel to 404A |
|---|---|---|---|---|---|---|---|---|---|---|
| | 32 | 1234yf | trans-1234ze | | | | | | | |
| R404A | | | | 1000 | 3922 | 81 | 1105 | 100% | 1.616 | 100% |
| R-407F | | | | 1000 | 1825 | 123 | 1105 | 100% | 1.694 | 105% |
| R-507A | | | | 1000 | 3985 | 91 | 1133 | 103% | 1.606 | 99% |
| R-407A | | | | 1000 | 2107 | 113 | 1030 | 93% | 1.686 | 104% |
| | | | | | | | | | | |
| | 34 | 10 | 56 | 408 | 233 | 125 | 971 | 88% | 1.713 | 106% |
| | 36 | 6 | 58 | 527 | 247 | 127 | 989 | 90% | 1.712 | 106% |
| | 38 | 4 | 58 | 616 | 260 | 129 | 1012 | 92% | 1.711 | 106% |
| | | | | | | | | | | |
| | 36 | 14 | 50 | 508 | 247 | 126 | 1015 | 92% | 1.706 | 106% |

The data in Table 2 indicate compositions of the present invention would serve as good replacements for R-404A, R-507A, R-407A and R-407F. These compositions show cooling capacity within about 10% of current refrigerants and improved energy efficiency versus R-404A, R-507A and R-407A. They also have significantly reduced GWP. Therefore, compositions of the present invention provide the best balance of properties as replacements for R-404A, R-507A, R-407F and R-407A.

## EXAMPLE 3

Comparative Example: Vapor Leakage of other HFC-32/HFO-1234vf/trans-HFO-1234ze compositions

Other compositions containing HFO-1234yf, HFC-32, and trans-HFO-1234ze are evaluated under vapor leak conditions as described above in Examples 1. Vapor leak conditions are continued until the formulation reaches atmospheric pressure (for this example, after about 67-97% leakage), and the Worst Case Fractionated Formulation (WCFF) is determined indicating the residual liquid or vapor composition which is expected to be the most toxic. The OEL for the WCFF is calculated. If it is above 400 ppm, the composition may be classified as a Class A toxicity (lower toxicity). Results are shown in Table 3 below for OELs for HFO-1234yf at 50 ppm and 100 ppm.

TABLE 3

| Case 1 | | |
|---|---|---|
| Initial Composition (A) | | Liquid Composition After 67.1% Leak (WCFF) at -38.9°C |
| Compound | wt% | wt% |
| R32 | 40 | 11.1 |
| 1234yf | 40 | 50.6 |
| trans-1234ze | 20 | 38.3 |
| | | |
| 1234yf OEL | Blend OEL | WCFF Blend OEL |
| ppm | ppm | ppm |
| 50 | 162 | 104 |
| 100 | 288 | 196 |
| **Case 2** | | |
| Initial Composition (B) | | Liquid Composition After 63.0% Leak (WCFF) at -38.5°C |
| Compound | wt% | wt% |
| R32 | 40 | 12.7 |
| 1234yf | 30 | 34.5 |
| trans-1234ze | 30 | 52.8 |
| | | |
| 1234yf OEL | Blend OEL | WCFF Blend OEL |
| ppm | ppm | ppm |
| 50 | 204 | 147 |
| 100 | 347 | 262 |
| **Case 3** | | |
| Initial Composition (C) | | Liquid Composition After 58.4% Leak (WCFF) at -38.1°C |
| Compound | wt% | wt% |
| R32 | 40 | 14.3 |
| 1234yf | 20 | 20.9 |
| trans-1234ze | 40 | 64.8 |
| | | |
| 1234yf OEL | Blend OEL | WCFF Blend OEL |
| ppm | ppm | ppm |
| 50 | 275 | 221 |
| 100 | 437 | 364 |
| **Case 4** | | |
| Initial Composition (D) | | Liquid Composition After 97.3% Leak (WCFF) at -40°C |
| Compound | wt% | wt% |
| R32 | 70 | 10 |
| 1234yf | 28 | 73.6 |

(continued)

| Case 4 | | |
|---|---|---|
| Initial Composition (D) | | Liquid Composition After 97.3% Leak (WCFF) at -40°C |
| Compound | wt% | wt% |
| trans-1234ze | 2 | 16.4 |
| | | |
| 1234yf OEL | Blend OEL | WCFF Blend OEL |
| ppm | ppm | ppm |
| 50 | 256 | 74 |
| 100 | 421 | 144 |
| Case 5 | | |
| Initial Composition (E) | | Liquid Composition After 97.3% Leak (WCFF) at -40°C |
| Compound | wt% | wt% |
| R32 | 75 | 10.9 |
| 1234yf | 23 | 65.9 |
| trans-1234ze | 2 | 23.2 |
| | | |
| 1234yf OEL | Blend OEL | WCFF Blend OEL |
| ppm | ppm | ppm |
| 50 | 302 | 82 |
| 100 | 477 | 159 |
| Case 6 | | |
| Initial Composition (F) | | Liquid Composition After 97.3% Leak (WCFF) at -40°C |
| Compound | wt% | wt% |
| R32 | 70 | 15.6 |
| 1234yf | 20 | 33.3 |
| trans-1234ze | 10 | 51.1 |
| | | |
| 1234yf OEL | Blend OEL | WCFF Blend OEL |
| ppm | ppm | ppm |
| 50 | 324 | 155 |
| 100 | 501 | 275 |
| Case 7 | | |
| Initial Composition (G) | | Liquid Composition After 97.3% Leak (WCFF) at -40°C |
| Compound | wt% | wt% |
| R32 | 75 | 17.4 |
| 1234yf | 15 | 23.6 |
| trans-1234ze | 10 | 59.0 |
| | | |
| 1234yf OEL | Blend OEL | WCFF Blend OEL |

(continued)

| Case 7 | | |
|---|---|---|
| Initial Composition (G) | | Liquid Composition After 97.3% Leak (WCFF) at -40°C |
| Compound | wt% | wt% |
| ppm | ppm | ppm |
| 50 | 397 | 207 |
| 100 | 579 | 347 |

The data demonstrates that compositions A through G produce WCFF compositions during leakage that have OEL less than 400. Thus these compositions would be classified by ASHRAE as Class B, higher toxicity refrigerants.

**Claims**

1. A composition consisting of:

   (A) a refrigerant component consisting essentially of
   from 4 to 16 weight percent of HFO-1234yf,
   from 34 to 38 weight percent of HFC-32, and
   from 48 to 60 weight percent of trans-HFO-1234ze;
   and optionally
   (B) a non-refrigerant component.

2. The composition of claim 1, wherein the non-refrigerant component consists of one or more components selected from the group consisting of lubricants, dyes, solubilizing agents, compatibilizers, stabilizers, tracers, perfluoropolyethers, anti-wear agents, extreme pressure agents, corrosion and oxidation inhibitors, metal surface energy reducers, metal surface deactivators, free radical scavengers, foam control agents, viscosity index improvers, pour point depressants, detergents, viscosity adjusters, and mixtures thereof.

3. Use of the composition of claim 1 as a refrigerant.

4. The use of claim 3, wherein the refrigerant replaces R-404A, R-407A, R-407F, or R-507A.

5. The use of claim 3, wherein the refrigerant is used in a refrigeration system with evaporation temperature between -40°C and 0°C.

6. A refrigeration apparatus containing the composition of claim 1.

7. The refrigeration apparatus of claim 6, wherein the apparatus includes an evaporator with evaporation temperature between -40°C and 0°C.

**Patentansprüche**

1. Zusammensetzung bestehend aus:

   (A) einer Kältemittelkomponente bestehend im Wesentlichen aus
   4 bis 16 Gewichtsprozent HFO-1234yf,
   34 bis 38 Gewichtsprozent HFC-32 und
   48 bis 60 Gewichtsprozent trans-HFO-1234ze;
   und wahlweise
   (B) einer Nichtkältemittelkomponente.

2. Zusammensetzung nach Anspruch 1, wobei die Nichtkältemittelkomponente aus einer oder mehreren Komponenten besteht ausgewählt aus der Gruppe bestehend aus Gleitmitteln, Farbstoffen, Löslichkeitsvermittlern, Verträglichmachern, Stabilisatoren, Markierungssubstanzen, Perfluorpolyethern, Abnutzungsverhinderungsmitteln, Höchstdruckmitteln, Korrosions- und Oxidationshemmern, Metalloberflächen-Energiereduktionsmitteln, Metalloberflächendeaktivatoren, Radikalfängern, Entschäumungsmitteln, Viskositätsindexverbesserungsmitteln, Pourpointreduziermitteln, Detergentien, Viskositätseinstellungsmitteln und Mischungen davon.

**3.** Verwendung der Zusammensetzung nach Anspruch 1 als Kältemittel.

**4.** Verwendung nach Anspruch 3, wobei das Kältemittel R-404A, R-407A, R407F oder R-507A ersetzt.

**5.** Verwendung nach Anspruch 3, wobei das Kältemittel in einem Kältesystem mit einer Verdampfungstemperatur zwischen -40 °C und 0 °C verwendet wird.

**6.** Kälteanlage, die die Zusammensetzung nach Anspruch 1 enthält.

**7.** Kälteanlage nach Anspruch 6, wobei die Anlage einen Verdampfer mit einer Verdampfungstemperatur zwischen -40 °C und 0 °C umfasst.

**Revendications**

**1.** Composition constituée:

(A) d'un constituant réfrigérant constitué essentiellement
de 4 à 16 pour cent en poids de HFO-1234yf,
de 34 à 38 pour cent en poids de HFC-32, et
de 48 à 60 pour cent en poids de *trans*-HFO-1234ze;
et optionnellement
(B) d'un constituant non réfrigérant.

**2.** Composition selon la revendication 1, le constituant non réfrigérant étant constitué d'un ou plusieurs constituants sélectionnés dans le groupe constitué des lubrifiants, des colorants, des agents solubilisants, des agents de mise en compatibilité, des agents stabilisants, des traceurs, des poly(éthers perfluorés), des agents anti-usures, des agents de résistance aux pressions extrêmes, des inhibiteurs de corrosion et d'oxydation, des agents de réduction de l'énergie de surface des métaux, des désactivateurs de surface métallique, des purificateurs de radicaux libres, des agents de régulation de mousse, des agents d'amélioration de l'indice de viscosité, des agents de réduction du point d'écoulement, des détergents, des agents d'ajustement de la viscosité, et de leurs mélanges.

**3.** Utilisation de la composition selon la revendication 1 comme réfrigérant.

**4.** Utilisation selon la revendication 3, le réfrigérant remplaçant le R-404A, R-407A, R-407F, ou R-507A.

**5.** Utilisation selon la revendication 3, le réfrigérant étant utilisé dans un système de réfrigération avec une température d'évaporation comprise entre -40°C et 0°C.

**6.** Appareil de réfrigération contenant la composition selon la revendication 1.

**7.** Appareil de réfrigération selon la revendication 6, l'appareil comprenant un évaporateur avec une température d'évaporation comprise entre -40°C et 0°C.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102516945 A
- WO 2012065026 A2
- US 2007007488 A1
- US 20090278075 A
- US 20060106263 A
- US 20070284555 A

**Non-patent literature cited in the description**

- *CHEMICAL ABSTRACTS,* 6629-10-3
- *CHEMICAL ABSTRACTS,* 32687-78-8
- *CHEMICAL ABSTRACTS,* 70331-94-1
- *CHEMICAL ABSTRACTS,* 94-91-7
- *CHEMICAL ABSTRACTS,* 60-00-4